# EUROPÄISCHE PATENTANMELDUNG

(11) **EP 2 399 800 A2**
(43) Veröffentlichungstag der Anmeldung: **28.12.2011**
(21) Anmeldenummer: 11170329.4
(22) Anmeldetag: 17.06.2011
(51) Int. Cl.: B61H 7/08

(54) **Schienenfahrzeug**

(30) Priorität: 24.06.2010 DE 102010025036
(71) Anmelder: SIEMENS AKTIENGESELLSCHAFT, 80333 München (DE)
(72) Erfinder: Schmitt, Volker, 91058 Erlangen (DE); Maischak, Dieter, 91085 Weisendorf (DE); Zenz, Rüdiger, 8020 Graz (AT)

(57) **Zusammenfassung**

Die Erfindung bezieht sich auf ein Schienenfahrzeug mit mindestens einem aus einem Traktionszwischenkreis (3) gespeiste, elektrische Fahrmotoren aufweisenden Motorwagen (1) und mindestens einem nicht angetriebenen Wagen (7;8), der durch mittels des Bremsstromes der Fahrmotoren erregbarer Wirbelstrombremsen mit vorgeordnetem Bremssteller (10) abbremsbar ist.

Um ein solches Schienenfahrzeug verbrauchs- und kostengünstig herstellen zu können, ist der Bremsteller (10) der Wirbelstrombremsen über eine Anordnung (9) zur Bereitstellung einer Gleichspannung an eine Zugsammelschiene (5) mit einer erheblich unter dem Spannungsniveau des Traktionszwischenkreises (3) liegenden Gleichspannung (Uz) angeschlossen, wobei die Zugsammelschiene (5) über einen Umrichter (4) mit dem Traktionszwischenkreis (3) verbunden ist. Die Anordnung (9) zur Bereitstellung einer Gleichspannung und der Bremssteller (10) sind in dem nicht angetriebenen Wagen untergebracht.

## Beschreibung

Die Erfindung betrifft ein Schienenfahrzeug mit mindestens einem aus einem Traktionszwischenkreis gespeiste, elektrische Fahrmotoren aufweisenden Motorwagen und mindestens einem nicht angetriebenen Wagen, der durch mittels des Bremsstromes der Fahrmotoren erregbarer Wirbelstrombremsen mit vorgeordnetem Bremssteller abbremsbar ist.

Ein Schienenfahrzeug dieser Art ist in einem Aufsatz von W.-D. Meier-Credner beschrieben, der in der Zeitschrift "ETR" 49 (2000, Heft 6, Seiten 412 bis 418) veröffentlicht ist. Bei diesem bekannten Schienenfahrzeug ist neben einem mit elektrischen Fahrmotoren ausgerüsteten Endwagen bzw. einem Stromrichterwagen jeweils ein nicht angetriebener Wagen angeordnet. Der Endwagen bzw. der Stromrichterwagen enthalten einen so genannten Traktionscontainer, der über einen Transformator in einem der beiden nicht angetriebenen Wagen (Trafowagen)mit elektrischer Energie aus dem Fahrdraht versorgt wird. Sowohl im nicht angetriebenen Trafowagen als auch in einem nicht angetriebenen, so genannten Mittelwagen, befinden sich Magnete für eine Wirbelstrombremse. In jedem Traktionscontainer sind Elemente zur Bildung eines Traktionszwischenkreises angeordnet, über den die jeweiligen Fahrmotoren der Motorwagen angetrieben werden. Außerdem ist in dem Traktionscontainer jeweils ein Bremssteller für die Wirbelstrombremsen angeordnet.

Bei dem bekannten Schienenfahrzeug sind an den Traktionszwischenkreis im Traktionscontainer die Fahrmotoren angeschlossen. Der Bremssteller für die Wirbelstrombremse ist ebenfalls an die Traktionszwischenkreisspannung angeschlossen, die somit unmittelbar auch zur Speisung der Wirbelstrombremsen dient. Dazu sind aus den Motorwagen zu den Wirbelstrombremsen in den nicht angetriebenen Wagen führende Mittelspannungskabel erforderlich.

Der Erfindung liegt die Aufgabe zugrunde, ein Schienenfahrzeug der eingangs beschriebenen Art besonders kosten- und verbrauchsgünstig herzustellen.

Zur Lösung dieser Aufgabe ist bei einem solchen Schienenfahrzeug erfindungsgemäß der Bremsteller der Wirbelstrombremsen über eine Anordnung zur Bereitstellung einer Gleichspannung an eine Zugsammelschiene mit einer erheblich unter dem Spannungsniveau des Traktionszwischenkreises liegenden Gleichspannung angeschlossen, wobei die Zugsammelschiene über einen Umrichter mit dem Traktionszwischenkreis verbunden ist, und die Anordnung zur Bereitstellung einer Gleichspannung und der Bremssteller sind in dem nicht angetriebenen Wagen untergebracht.

Ein wesentlicher Vorteil des erfindungsgemäßen Schienenfahrzeuges besteht darin, dass wegen der Unterbringung der Anordnung zur Bereitstellung einer Gleichspannung sowie des Bremsstellers in dem nicht angetriebenen Wagen die Möglichkeit gegeben ist, für die Speisung der Wirbelstrombremse mit einem Kabel mit dünner Isolierung und damit mit relativ kleinen Querschnitt auszukommen, weil dieses Kabel auf einem vergleichsweise niedrigen Spannungsniveau liegt; dieser Spannungsbereich liegt erheblich unter dem des Traktionszwischenkreises.

Bei einer vorteilhaften Ausführungsform des erfindungsgemäßen Schienenfahrzeugs weist die Zugsammelschiene Gleichspannung auf, und die Anordnung zur Bereitstellung einer Gleichspannung ist ein Gleichspannungswandler.

An sich ist die Speisung der Wirbelstrombremsen aus der Bremsenergie bzw. mit dem Bremsstrom der Fahrmotoren sehr zuverlässig; um eine zusätzliche Absicherung der Bremsfähigkeit der Wirbelstrombremsen zu erreichen, ist gemäß einer Weiterbildung der Erfindung zwischen der Zugsammelleitung und dem Gleichspannungswandler ein Batterieladegerät angeordnet, an das eine Bremskraftabsicherungsbatterie angeschlossen ist. Dabei kann diese Batterie für einen reinen Ausfallbetrieb ausgelegt sein, d. h. nur für sicherheitsrelevante Schnellbremsungen.

Bei einer vorteilhaften Ausführungsform des erfindungsgemäßen Schienenfahrzeugs beträgt die Ausgangsgleichspannung des Gleichspannungswandlers etwa 110 V und die Gleichspannung an der Zugsammelschiene etwa 440 V bei einer Traktionszwischenkreisspannung von 3 kV.

Bei einer besonders vorteilhaften Ausführungsform des erfindungsgemäßen Schienenfahrzeugs ist die Zugsammelschiene ein Dreiphasen-Wechselstromsystem, und die Anordnung zur Bereitstellung einer Gleichspannung ist ein Gleichrichter. Dabei beträgt die Ausgangsgleichspannung des Gleichspannungswandlers etwa 110 V und die Spannung des Dreiphasen-Wechselstromsystems der Zugsammelschiene etwa 440 V bei einer Traktionszwischenkreisspannung von 3 kV. Da dies das übliche Spannungssystem für das Bordnetz ist, können hierfür Bordnetzumrichter verwendet werden und bei entsprechender Leistungsreserve der Bordnetzumrichter kann die Wirbelstrombremse mit zwischengeschaltetem Gleichrichter aus dem Bordnetz betrieben werden.

Bei dem erfindungsgemäßen Schienenfahrzeug kann der Motorwagen unterschiedlich ausgebildet sein; beispielsweise kann er einen integralen Endwagen in einem mehrgliedrigen Schienenfahrzeug bilden. Vorteilhafterweise ist der Motorwagen eine elektrische oder dieselelektrische Lokomotive.

Bei dem erfindungsgemäßen Schienenfahrzeug können Wirbelstrombremsen verschiedenen Typs eingesetzt werden. Als besonders vorteilhaft wird es angesehen, wenn die Wirbelstrombremse eine rotierende Wirbelstrombremse ist.

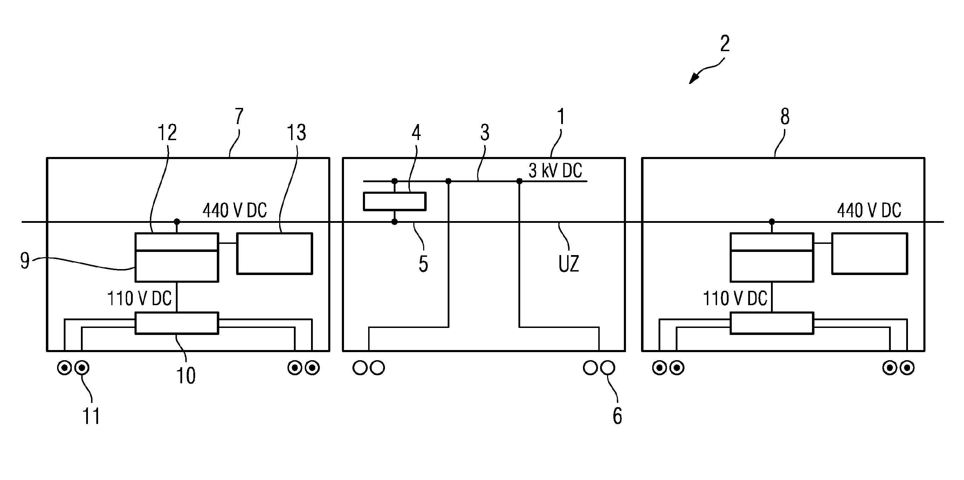

Zur weiteren Erläuterung der Erfindung ist in der Figur ein Ausführungsbeispiel eines Schienenfahrzeugs mit einem Motorwagen und zwei angetriebenen Wagen dargestellt.

In der Figur ist mit 1 ein Motorwagen eines Schienenfahrzeugs 2 bezeichnet. Vom Motorwagen 1 ist aus Übersichtlichkeitsgründen nur sein Traktionszwischenkreis 3 und sein Umrichter 4 gezeigt. Mittels des Umrichters 4 wird die Spannung des Traktionszwischenkreises, in der Regel 3 kV DC, auf eine Gleichspannung Uz an einer Zugsammelschiene 5 umgesetzt, die sich durch alle Wagen des Schienenfahrzeugs 2 erstreckt und auf einem Spannungsniveau von 440 V DC liegt. Der Motorwagen 1 ist mit nicht dargestellten Motoren ausgerüstet, die direkt aus dem Traktionszwischenkreis eingespeist sind. Die kleinen Kreise am Fuße des Motorwagens 1 sollen die von nicht dargestellten Fahrmotoren angetriebenen Räder bzw. Achsen 6 kennzeichnen.

Beiderseits des Motorwagens 1 befinden sich bei dem dargestellten Schienenfahrzeug 2 ein erster nicht angetriebener Wagen 7 und ein weiterer nicht angetriebener Wagen 8. Beide Wagen 7 bzw. 8 sind im hier interessierenden Zusammenhang gleich ausgeführt, so dass sich die nachfolgende Beschreibung nur auf die Erläuterung des elektrischen Aufbaus des angetriebenen Wagens 7 beziehen kann.

Wie die Figur zeigt, ist an die Zugsammelschiene 5 im Bereich des nicht angetriebenen Wagens 7 ein Gleichspannungswandler 9 angeschlossen, der die Spannung an der Zugsammelschiene 5 auf 110 V DC wandelt. Ausgangsseitig ist an den Gleichspannungswandler 9 ein Bremssteller 10 für die nicht dargestellten rotierenden Wirbelstrombremsen angeordnet; die Kreise mit einem mittleren schwarzen Punkt deuten die Räder bzw. Achsen 11 des nicht angetriebenen Wagens 7 an.

Dem Gleichspannungswandler 9 ist ein Batterieladegerät 12 vorgeordnet, das elektrische Energie in eine zugeordnete Bremskraftabsicherungsbatterie 13 in dem nicht angetriebenen Wagen 7 einspeist. Diese Batterie 13 dient zur Absicherung der Bremskraft insbesondere im Falle einer Schnellbremsung.

Wie die Figur ferner zeigt, kann das Batterieladegerät 12 in den Gleichspannungswandler 9 integriert sein, also mit diesem eine Baueinheit bilden.

## Patentansprüche

1. Schienenfahrzeug mit mindestens einem aus einem Traktionszwischenkreis (3) gespeiste, elektrische Fahrmotoren aufweisenden Motorwagen (1) und mindestens einem nicht angetriebenen Wagen (7;8), der durch mittels des Bremsstromes der Fahrmotoren erregbarer Wirbelstrombremsen mit vorgeordnetem Bremssteller (10) abbremsbar ist,
**dadurch gekennzeichnet, dass**
• der Bremsteller (10β) der Wirbelstrombremsen über eine Anordnung (9) zur Bereitstellung einer Gleichspannung an eine Zugsammelschiene (5) mit einer erheblich unter dem Spannungsniveau des Traktionszwischenkreises (3) liegenden Gleichspannung (Uz) angeschlossen ist, wobei
• die Zugsammelschiene (5) über einen Umrichter (4) mit dem Traktionszwischenkreis (3) verbunden ist, und
• die Anordnung (9) zur Bereitstellung einer Gleichspannung und der Bremssteller (10) in dem nicht angetriebenen Wagen (7;8) untergebracht sind.

2. Schienenfahrzeug nach Anspruch 1, **dadurch gekennzeichnet, dass**
• die Zugsammelschiene Gleichspannung aufweist und
• die Anordnung zur Bereitstellung einer Gleichspannung ein Gleichspannungswandler (9) ist.

3. Schienenfahrzeug nach Anspruch 2, **dadurch gekennzeichnet, dass**
• zwischen der Zugsammelleitung (5) und dem Gleichspannungswandler (9) ein Batterieladegerät (12) angeordnet ist, an das eine Bremskraftabsicherungsbatterie (13) angeschlossen ist.

4. Schienenfahrzeug nach einem der vorangehenden Ansprüche, **dadurch gekennzeichnet, dass**
• die Ausgangsgleichspannung des Gleichspannungswandlers (9) etwa 110 V und die Spannung (Uz) an der Zugsammelschiene (5) etwa 440 V bei einer Gleichspannung von 3 kV am Traktionszwischenkreis (3) beträgt.

5. Schienenfahrzeug nach Anspruch 1, **dadurch gekennzeichnet, dass**
• die Zugsammelschiene ein Dreiphasen-Wechselstromsystem ist und
• die Anordnung zur Bereitstellung einer Gleichspannung ein Gleichrichter ist.

6. Schienenfahrzeug nach Anspruch 5, **dadurch gekennzeichnet, dass**
• die Ausgangsgleichspannung des Gleichspannungswandlers (9) etwa 100 V und die Spannung des Dreiphasen-Wechselstromsystems der Zugsammelschiene (5) etwa 440 V bei einer Gleichspannung von 3 kV am Traktionszwischenkreis (3) beträgt.

7. Schienenfahrzeug nach einem der vorangehenden Ansprüche, **dadurch gekennzeichnet, dass**
• der Motorwagen (1) eine elektrische oder dieselelektrische Lokomotive ist.

8. Schienenfahrzeug nach einem der vorangehenden Ansprüche, **dadurch gekennzeichnet, dass**
• die Wirbelstrombremse eine rotierende Wirbelstrombremse ist.
